# NEUE EUROPÄISCHE PATENTSCHRIFT

(11) **EP 1 972 500 B2**
(45) Veröffentlichungstag und Bekanntmachung des Hinweises auf die Entscheidung über den Einspruch: **05.12.2018**
(45) Hinweis auf die Patenterteilung: 14.03.2012
(21) Anmeldenummer: 08005282.2
(22) Anmeldetag: 20.03.2008
(51) Int. Cl.: B60R 9/06, B60R 9/10

(54) **Lastenträger für ein Kraftfahrzeug**
Load carrier for a motor vehicle
Support de charge pour un véhicule automobile

(30) Priorität: 29.03.2007 DE 102007015603; 23.03.2007 DE 102007014618
(43) Veröffentlichungstag der Anmeldung: 24.09.2008
(60) Teilanmeldung: 12000178.9
(73) Patentinhaber: WESTFALIA - Automotive GmbH, 33378 Rheda-Wiedenbrück (DE)
(72) Erfinder: Waldau, Jens, 33378 Rheda-Wiedenbrück (DE); Hermbusch, Gerhard, 33449 Langenberg (DE)
(74) Vertreter: Patentanwälte Bregenzer und Reule Partnerschaftsgesellschaft mbB

(56) Entgegenhaltungen:
- EP-A1- 1 059 205
- EP-A1- 1 393 979
- WO-A-2006/110078
- WO-A1-2006/004519
- DE-A1-102004 022 835
- DE-A1-102004 044 246
- DE-U1-202005 004 043
- FR-A- 809 094
- US-A- 3 757 975
- US-A- 5 460 304
- US-A- 5 527 146
- US-A- 5 664 717
- US-A- 5 853 278
- US-A- 5 881 937
- US-A- 6 129 371
- US-A- 6 152 341
- US-A1- 2002 005 423
- US-A1- 2004 011 837
- US-B1- 6 244 483
- US-B1- 6 244 483
- ATERA TRÄGERSYSTEME, 2006, KATALOG
- ATERA STRADA, BENUTZERINFORMATION, PART-NO 022610
- AUSDRUCK DER WEBSITE: HTTP://WEB.ARCHIVE.ORG/WEB/20060621115119/H TTP://WWW.ATERA.INFO/DE/30_PRODUCKTE/10_PKW -VAN/20_HECK/STRADA/STRADA_DETAILS.PHP
- AUSDRUCK DER PDF-DATEI: "INSTRUCTION MANUAL FOR THULE 916/917 T2 BIKE RACK", DIE JEDENFALLS AM 27. MäRZ 2006 üBER "HTTPS://WEB.ARCHIVE.ORCI/WEB/2006052707094 7/HTTP://WWW.THULERACKS.COM/THULE/INSTRUCTI ONS/5015529O2%2O91 6%20917.PDF" FüR DIE ÖFFENTLICHKEIT ABRUFBAR WAR

## Beschreibung

Die Erfindung betrifft einen Lastenträger für ein Kraftfahrzeug, insbesondere einen Personenkraftwagen, mit einer Tragstruktur zum Tragen einer Last, die in einer Arbeitsstellung des Lastenträgers nach hinten vor einen Heckbereich des Kraftfahrzeugs vorsteht, gemäß dem Oberbegriff des Anspruchs 1.

Ein derartiger Lastenträger geht aus US 6,244,483 B1 hervor.

Der Lastenträger verdeckt in seiner Arbeitsstellung, wenn er an dem Kraftfahrzeug angeordnet ist, eine Heckleuchtenanordnung des Personenkraftwagens. Von hinten sind somit die Heckleuchten des Kraftfahrzeuges nicht mehr sichtbar. Lastenträger haben daher eigene Heckleuchtenanordnungen, die mit dem Bordnetz des Kraftfahrzeuges verbunden werden und sichtbar sind. Die an exponierter Stelle hinten am Lastenträger angeordnete Heckleuchtenanordnungen sind jedoch anfällig für Beschädigungen, beispielsweise beim Rangieren mit dem Kraftfahrzeug.

Es ist daher die Aufgabe der Erfindung, einen Lastenträger mit einer verbesserten Handhabbarkeit bereitzustellen.

Zur Lösung der Aufgabe ist ein Lastenträger gemäß der technischen Lehre des Anspruchs 1 vorgesehen.

Bei einem erfindungsgemäßen Lastenträger ist vorgesehen, dass er eine bezüglich der Tragstruktur zwischen einer für einen Fahrbetrieb des Kraftfahrzeugs vorgesehenen Fahrstellung und einer zum Be- und Entladen des Kraftfahrzeugs vorgesehenen Ladestellung verstellbare Trageanordnung zum Auflegen der Last aufweist, wobei die Trageanordnung mit der auf ihr angeordneten Last in der Ladestellung einen Schwenkbereich einer Heckklappe oder einer Hecktür des Kraftfahrzeugs freigibt. Die Trageanordnung umfasst vorzugsweise einen Fahrradträger, eine Trägerplattform zum Auflegen von Lasten oder dergleichen.

Ein Grundgedanke ist dabei, eine Tragstruktur sozusagen fahrzeugfest zu belassen, beispielsweise nach hinten vorstehende Träger oder Trägerarme, und auf dieser Tragstruktur die eigentliche Trageanordnung beweglich zu lagern. Die Trageanordnung kann von der Fahrstellung in die Ladestellung verlagert werden, ohne dass man die auf ihr aufliegende Last entfernen muss. Die Last kann auf der Trageanordnung verbleiben.

Unter der oberen Ladeebene bleibt beispielsweise ein Blickbereich für eine Heckleuchtenanordnung frei.

Zwischen der oberen und der unteren Ladeebene kann auch mindestens eine Zwischenebene vorgesehen sein, z.B. in der Art einer Treppenstruktur.

Die untere Ladeebene und die obere Ladeebene können unterschiedliche Ladekapazitäten aufweisen. Vorzugsweise haben die untere und die obere Ladeebene jedoch im wesentlichen dieselbe Ladekapazität. Beispielsweise sind die beiden Ladeebenen in Fahrzeuglängsrichtung im wesentlichen gleich lang.

Die obere Ladeebene kragt vorteilhaft verhältnismäßig weit nach hinten vor die untere Ladeebene vor, sodass der Schutz der Heckleuchtenanordnung gewährleistet ist. Dennoch bleibt die Heckleuchtenanordnung, die mit dem Bordnetz des Kraftfahrzeuges verbindbar ist, zugänglich.

An der Tragstruktur ist vorteilhaft eine Heckleuchtenanordnung angeordnet. Die Heckleuchtenanordnung ist zweckmäßigerweise unterhalb der oberen Ladeebene und vom hinteren, freien Ende des Lastenträgers entfernt näher beim Fahrzeugheck angeordnet. Vorteilhaft ist es, wenn die obere Ladeebene derart oberhalb der unteren Ladeebene angeordnet ist, dass ein Blickbereich zu der Heckleuchtenanordnung frei bleibt. Die Heckleuchtenanordnung ist unterhalb der oberen Ladeebene, d.h. zum Kraftfahrzeug zurückversetzt angeordnet, sodass sie vor Beschädigungen geschützt ist.

Vorteilhaft ist auch ein modulares Erweiterungskonzept, bei dem mindestens ein Erweiterungsbauteil an einem Basis-Träger des Lastenträgers anordenbar oder daran beweglich gelagert ist. Der Basis-Träger bildet z.B. einen Bestandteil der Tragstruktur oder einer bezüglich der Tragstruktur beweglichen Trageanordnung. Auf diese Weise lässt sich die Ladekapazität des Trägers bei Bedarf vergrößern.

Das Erweiterungsbauteil steht beispielsweise in seiner Gebrauchsstellung seitlich, nach hinten oder nach oben vor die Trageanordnung vor.

Das Erweiterungsbauteil umfasst einen oder vorzugsweise zwei S-artige oder S-förmige Trägerstäbe. Die S-artigen Trägerstäbe sind vorzugsweise seitlich an dem Basisträger lösbar befestigbar. Durch die S-Form stehen die Trägerstäbe nach schräg hinten oben vor. An dem mindestens einen Erweiterungsbauteil ist beispielsweise mindestens eine weitere Tragplattform oder mindestens eine weitere Sportgerätehalterung anbringbar oder angebracht.

Das Erweiterungsbauteil bildet vorzugsweise eine Betätigungshandhabe zum Verlagern der Trageanordnung in die Ladestellung oder die Fahrstellung. Es kann auch eine Betätigungshandhabe, z.B. ein Handgriff, an dem Erweiterungsbauteil angeordnet sein.

Das mindestens eine Erweiterungsbauteil stellt zweckmäßigerweise die obere Ladeebene bereit. Das Erweiterungsbauteil steht in der Gebrauchsstellung nach hinten oben vor die beispielsweise die Trageanordnung oder die Tragstruktur vor.

Die obere Ladeebene kann beispielsweise eine durchgehende Ladeplattform umfassen.

Prinzipiell ist es z.B. möglich, eine oder die Heckleuchtenanordnung an der Tragstruktur oder der beweglichen Trageanordnung anzuordnen, z.B. hinter der unteren oder auch der oberen Ladeebene.

Die Tragstruktur untergreift die Trageanordnung zweckmäßigerweise zumindest in der Fahrstellung. Die Trageanordnung liegt vorteilhaft zumindest in der Fahrstellung auf der Tragstruktur auf, z.B. direkt oder indirekt. Indirekt z.B. auf einer Schwenklageranordnung. Es ist vorteilhaft, wenn die Trageanordnung auch in der Ladestellung zumindest teilweise oberhalb der Tragstruktur angeordnet ist.

Vorgesehen ist eine Schwenklageranordnung, mit der die Trageanordnung schwenkbar an der Tragstruktur gelagert ist.

Die Trageanordnung nimmt in der Ladestellung zweckmäßigerweise eine vom Kraftfahrzeug abgewandte Schrägstellung ein. Beispielsweise ist die Trageanordnung in der Ladestellung von dem Kraftfahrzeug weg geschwenkt.

Die Trageanordnung ist erfindungsgemäß in der Art einer Wippe ausgebildet.

Eine erste Wipparmanordnung definiert einerseits der Schwenklagerung die untere Ladeebene und eine zweite Wipparmanordnung andererseits der Schwenklagerung definiert die obere Ladeebene.

Eine Schwenkachse der Schwenklageranordnung verläuft bezüglich der Fahrzeuglängsrichtung des Kraftfahrzeuges zweckmäßigerweise zwischen einem dem Fahrzeugheck zugewandten Längsendbereich der unteren Ladeebene und einem freien, vom Fahrzeugheck abgewandten Endbereich der oberen Ladeebene. Auf diese Weise ist es möglich, einen Freiraum unterhalb der oberen Ladeebene für eine Schwenkbewegung zu nutzen. Die Schwenkachse kann zwar horizontal schräg und/oder schräg zur Fahrzeugquerrichtung verlaufen. Bevorzugt ist aber ein etwa horizontaler Verlauf.

Die jeweilige Schwenkachse kann beispielsweise im Bereich der unteren Ladeebene verlaufen. Aber auch im Bereich zwischen den beiden unteren und oberen Ladeebenen oder an der oberen Ladeebene kann eine Schwenkachse vorgesehen sein.

Zweckmäßigerweise verläuft die jeweilige Schwenkachse etwa im Bereich einer Längsmitte zwischen der unteren und der oberen Ladeebene. Somit ist die Trageanordnung mit und ohne Last zweckmäßigerweise im wesentlichen ausbalanciert. Es versteht sich, dass hier auch eine eindeutige Kipp-Lage vorteilhaft sein kann, d.h. dass die Trageanordnung um die Schwenkachse in die Ladestellung oder die Freigabestellung selbsttätig schwenkt und dort verbleibt. Zumindest in der jeweils anderen Stellung wird die Trageanordnung dann vorteilhaft durch eine Verriegelungs- oder Halteeinrichtung gehalten.

Die Schwenkachse verläuft zweckmäßigerweise durch ein Schwenklager oder ein Schwenklagerpaar der Schwenklageranordnung bzw. wird durch dieses Schwenklager definiert. Vorzugsweise ist dann nur eine einzige Schwenkachse vorhanden.

Die Trageanordnung hat zweckmäßigerweise zumindest im beladenen Zustand eine solche Schwerpunktlage, dass sie selbsttätig in der Fahrstellung und/oder in der Ladestellung bleibt. Die Trageanordnung bleibt also hier ohne eine zusätzliche Halterung oder Stütze in der jeweiligen Fahrstellung oder Ladestellung.

Zweckmäßigerweise durchläuft die Trageanordnung zwischen der Fahrstellung und der Ladestellung einen Verstellweg mit einem Kipppunkt. Die Trageanordnung kippt dann sozusagen in die Fahrstellung oder die Ladestellung.

Es versteht sich, dass zum Halten in der Fahrstellung und/oder in der Ladestellung Stützen, Halterungen oder dergleichen vorteilhaft sind. Diese können auch als zusätzliche Sicherheitsmaßnahme vorgesehen sein.

Es versteht sich, dass auch die Heckleuchtenanordnung verschwenkbar oder in sonstiger Weise beweglich an dem Lastenträger angeordnet sein kann, beispielsweise an dessen Tragstruktur. Eine bewegliche, insbesondere schwenkbewegliche Heckleuchtenanordnung kann beispielsweise einen schwenkweg zum Verschwenken der Trageanordnung freigeben.

Es bildet einen erfindungsgemäßen Grundgedanken, wenn eine bezüglich einer Tragstruktur eines Lastenträgers bewegliche Trageanordnung eine untere erste und eine obere, vom Fahrzeugheck entferntere zweite Ebene aufweist. Ein Grundgedanke ist dabei, dass die obere Ladeebene weiter von der Fahrbahnoberfläche entfernt ist als die untere Ladeebene, sodass unterhalb der oberen Ladeebene unterhalb der Trageanordnung ein größerer Bewegungsbereich, insbesondere Schwenkbereich, frei bleibt.

Eine Heckleuchtenanordnung kann, muss aber nicht an der Tragstruktur angeordnet sein. Sie könnte beispielsweise auch an der Trageanordnung angeordnet sein.

Vorteilhaft ist eine Fußbetätigungseinrichtung zum Betätigen der Trageanordnung. Bei einer Fußbetätigung stehen verhältnismäßig große Betätigungskräfte zur Verfügung.

Die Fußbetätigungseinrichtung wirkt z.B. auf die bezüglich der Tragstruktur beweglich gelagerte Trageanordnung. Beispielsweise ist die Fußbetätigungseinrichtung mit der Trageanordnung fest oder gelenkig verbunden oder gleitet an der Trageanordnung zu deren Betätigung entlang.

Es ist auch möglich, dass die Fußbetätigungseinrichtung z.B. auf eine Schwenklageranordnung zur beweglichen Lagerung der Trageanordnung bezüglich der Tragstruktur wirkt. Z.B. kann die Fußbetätigungseinrichtung auf einen Schwenkarm der Schwenklageranordnung, insbesondere eines einzelnen Schwenklagers, wirken. Die Fußbetätigungseinrichtung ist z.B. mit einem Schwenkarm fest oder gelenkig verbunden oder wird durch einen Schwenkarm gebildet.

Die Fußbetätigungseinrichtung hat zweckmäßigerweise einen Freigang, so dass sie zwischen einer Ruhestellung, bei der sie außer Eingriff mit der Trageanordnung ist, und einer Arbeitsstellung verstellbar ist, bei der sie zum Verstellen der Trageanordnung mit dieser in Eingriff ist.

Vorzugsweise ist eine Verriegelungseinrichtung zum Verriegeln der Trageanordnung bezüglich der Tragstruktur zumindest in der Fahrstellung vorgesehen. Ein unbeabsichtigtes Schwenken oder lineares Verfahren der Trageanordnung, was im Fahrbetrieb gefährlich sein könnte, wird durch die verriegelungseinrichtung verhindert.

Der Lastenträger, insbesondere die bewegliche Trageanordnung, kann beispielsweise eine Trägerplattform zum Abstellen der Last und/oder eine Sportgerätehalterung umfassen. Die Sportgerätehalterung ist beispielsweise eine Fahrradhalterung. Es versteht sich, dass Sportgerätehalterungen zweckmäßigerweise lösbar mit der Trageanordnung verbindbare Bauteile sind.

Die Tragstruktur enthält z.B. ein an dem Kraftfahrzeug verschieblich angeordnetes Trägerteil. Beispielsweise ist das verschiebliche Trägerteil ein an der Karosserie des Fahrzeugs nach hinten ausziehbares Trägerteil, ein Schwenkteil oder dergleichen. Besonders bevorzugt ist es, wenn das Trägerteil eine Art Schublade bildet.

Die Tragstruktur umfasst zweckmäßigerweise mindestens zwei in Fahrzeugquerrichtung zueinander beabstandete Trägerelemente oder Trägerstäbe.

Diese Trägerelemente sind beispielsweise in Aufnahmen einsteckbar, beispielsweise durch einen Stoßfänger des Kraftfahrzeuges hindurch. Zweckmäßigerweise sind die Aufnahmen mit Längsträgern einer Karosserie des Kraftfahrzeugs verbunden.

Alternativ ist es auch denkbar, dass die Tragstruktur eine Halterung zum lösbaren Anordnen an einer Anhängekupplung des Kraftfahrzeugs aufweist.

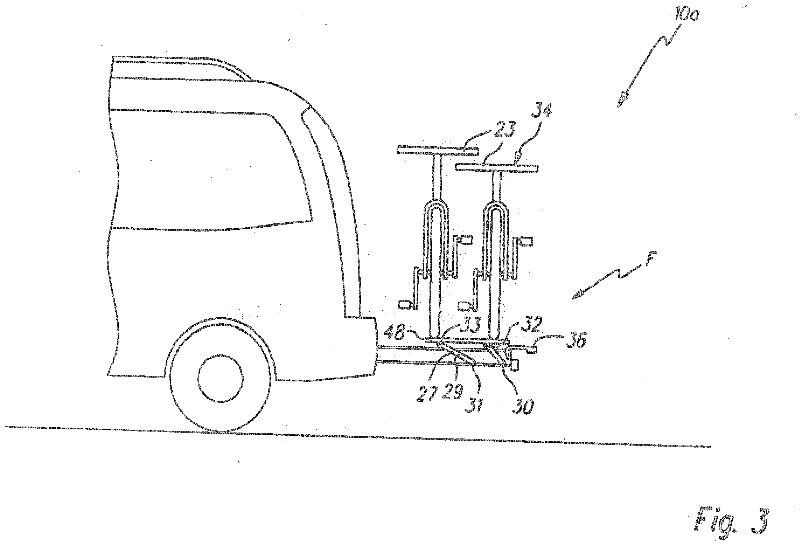

Es stellt an sich einen erfindungsgemäßen Gedanken dar, eine Trageanordnung zum Tragen einer Last in der Art einer Wippe an einer Tragstruktur eines Lastenträgers zwischen einer für einen Fahrbetrieb des Kraftfahrzeugs vorgesehenen Fahrstellung und einer zum Be- und Entladen des Kraftfahrzeugs vorgesehenen Ladestellung um eine Schwenkachse schwenkbar zu lagern, wobei die Trageanordnung eine näher beim Fahrzeugheck angeordnete Ladeebene und eine vom Fahrzeugheck entferntere Ladeebene aufweist und wobei die Schwenkachse zwischen den Ladeebenen verläuft. Dabei ist es möglich, dass in der Fahrstellung:
- beide Ladeebenen auf einer Ebene sind, z.B. im wesentlichen horizontal verlaufen, wie in Figur 3 gezeichnet und nicht beansprucht.
- in der oben beschriebenen Weise die dem Kraftfahrzeug nähere Ladeebene unterhalb der vom Kraftfahrzeug entfernteren Ladeebene angeordnet ist wie im Anspruch 1 beansprucht oder
- die näher beim Fahrzeugheck angeordnete Ladeebene eine obere Ladeebene und die vom Fahrzeugheck entferntere Ladeebene eine untere Ladeebene bilden wie nicht beansprucht.
   Ferner ist es zwar vorteilhaft, aber nicht zwingend nötig, dass die Schwenkachse der Wippen-Trageanordnung etwa im Bereich einer Längsmitte zwischen der dem Kraftfahrzeug näheren Ladeebene und der vom Kraftfahrzeug entfernteren Ladeebene verläuft. Der Lastenträger kann mit weitere der obengenannten Merkmale aufweisen, z.B. eine Verriegelung für die Fahrstellung, eine Heckleuchtenanordnung, eine Halterung zum lösbaren Anordnen an einer Anhängekupplung oder Steckenden zum Stecken an ein Heck eines Kraftfahrzeugs, eine Schiebelagerung am Kraftfahrzeug oder dargleichen.

Nachfolgend werden Ausführungsbeispiele der Erfindung anhand der Zeichnung erläutert. Es zeigen:

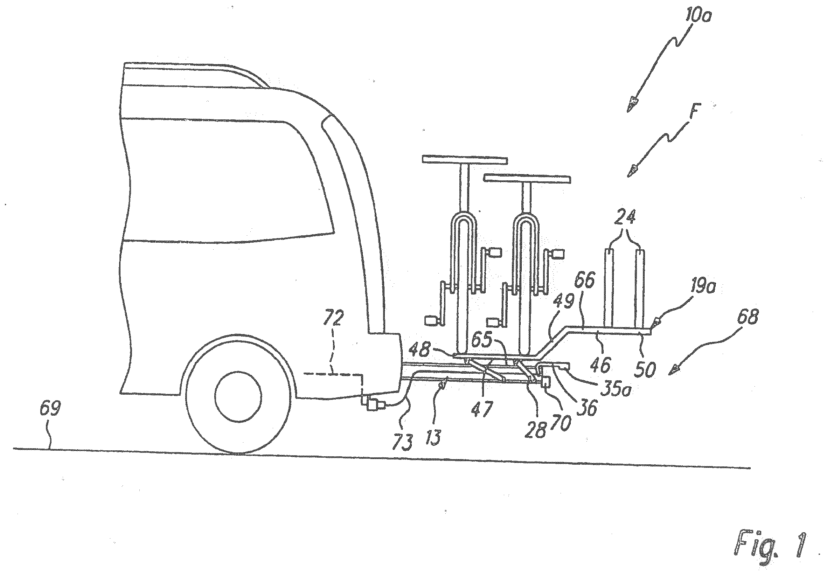

- Figur 1: eine schematische Seitenansicht eines Ausführungsbeispiels eines nicht erfindungsgemäßen Lastenträgers in Fahrstellung,

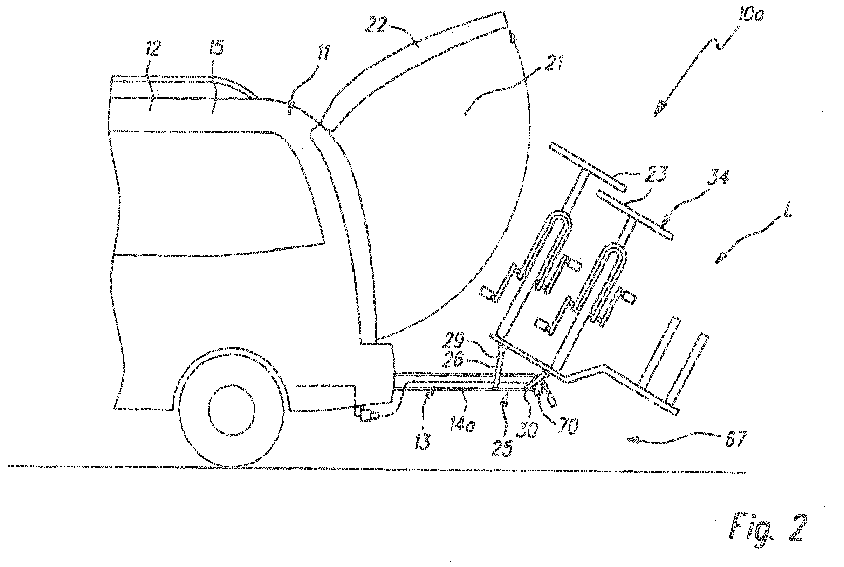

- Figur 2: den Lastenträger gemäß Figur 1 in Ladestellung,
- Figur 3: den Lastenträger gemäß Figur 1 mit nur einer Ladeebene.

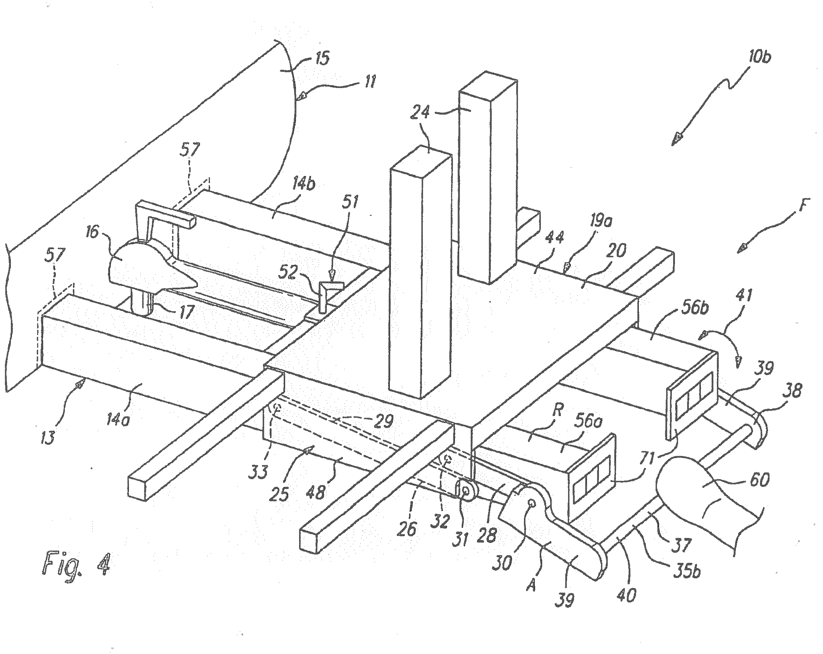

- Figur 4: eine perspektivische Fahrstellungsansicht eines nicht erfindungsgemäßen Ausführungsbeispiels in Gestalt eines Lastenträgers, der wie der Lastenträger aus Figur 3 nur eine Ladeebene aufweist, aber z.B. mit Erweiterungsbauteilen um weitere Ladeebene erweiterbar ist,

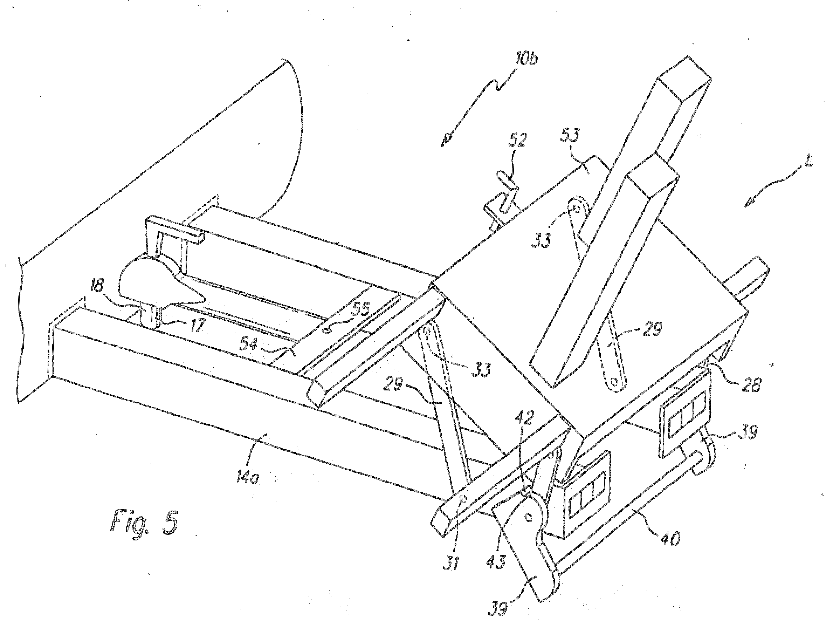

- Figur 5: den Lastenträger gemäß Figur 4 in Ladestellung,

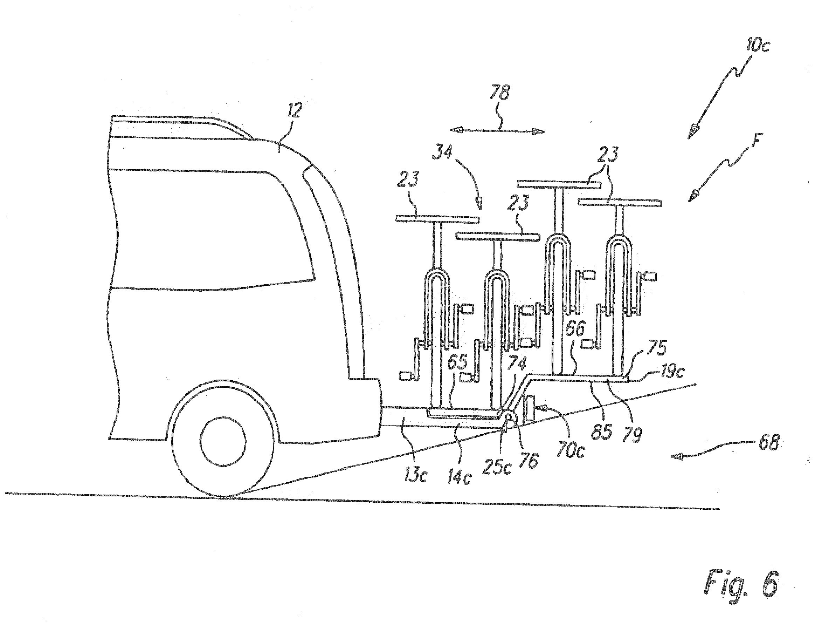

- Figur 6: eine schematische Seitenansicht eines Ausführungsbeispiels eines erfindungsgemäßen Lastenträgers in Fahrstellung,

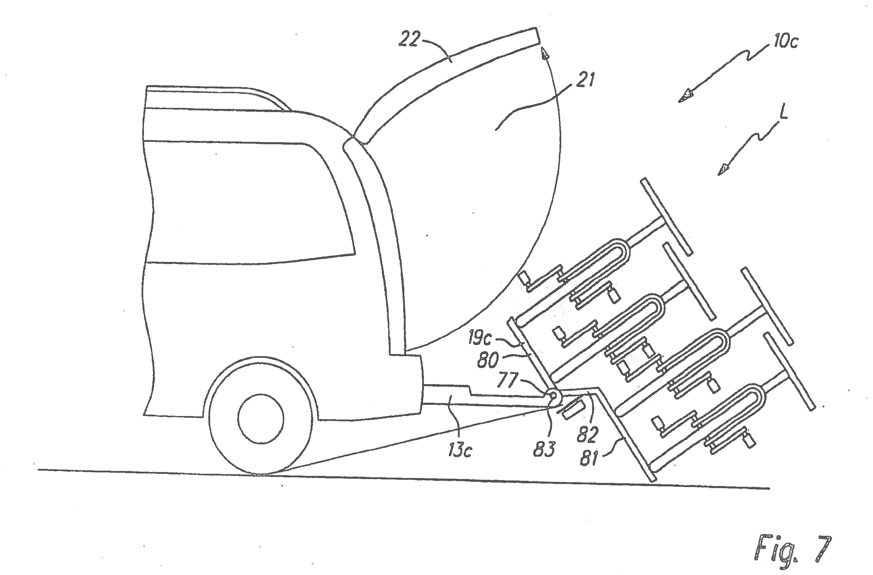

- Figur 7: den Lastenträger gemäß Figur 6 in Ladestellung, und

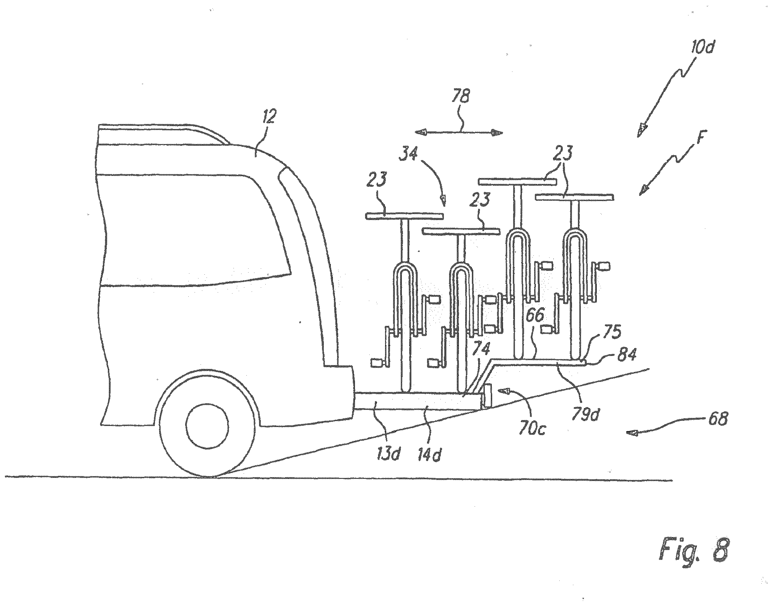

- Figur 8: einen nicht erfindungsgemäßen Lastenträger mit einer feststehenden, stufenförmigen Trägerstruktur mit zwei Ladeebenen.

Bei den nachfolgend anhand von Lastenträgern 10a, 10b, 10c und 10d beschriebenen Ausführungsbeispielen sind gleiche Komponenten mit denselben Bezugszeichen versehen. Für den Lastenträger 10a spezifische Bauteile sind mit "a" gekennzeichnet, für die Lastenträger 10b, 10c und 10d spezifische Bauteile mit "b", "c" und "d".

Der Lastenträger 10a ist einem Heckbereich 11 eines Kraftfahrzeugs 12 angeordnet. Eine Tragstruktur 13a mit zwei Längsträgern 14a, 14b ist fahrzeugfest mit dem Kraftfahrzeug 12 verbunden.

Beispielsweise sind die Längsträger 14a, 14b in schematisch dargestellte Aufnahmen 57 an der Karosserie 15 von hinten her eingesteckt.

Die Tragstruktur 13a kann auch mit einer Anhängekupplungs-Halterung 16 an einem Kugelhals 17 einer Anhängekupplung 18 des Kraftfahrzeugs 12 lösbar befestigt sein. Die Längsträger 14a, 14b und die Anhängekupplungs-Halterung 16 sind durch einen oder mehrere Querträger 54 verbunden.

An den Längsträgern 14 ist eine Trageanordnung 19a mit einem Tragegestell 20 zwischen einer Fahrstellung F und einer Ladestellüng L beweglich gelagert. In der Ladestellung L ist die Trageanordnung 19a bezüglich des Kraftfahrzeugs 12 nach schräg hinten weg geschwenkt, so dass sie einen Schwenkbereich 21 einer Heckklappe 22 frei gibt. Die Heckklappe 22 kann an Fahrrädern 23 vorbeischwenken, die auf der Trageanordnung 19a mit Sportgerätehaltern 24 befestigt sind. Die Fahrräder 23 sind eine auf der Trageanordnung 19a abgestellte Last 34.

Zum Verstellen, insbesondere zum Schwenken, der Trageanordnung 19a bezüglich der Tragstruktur 13a ist zwischen diesen beiden Bauteilen eine Schwenklageranordnung 25 vorgesehen.

Die Schwenklageranordnung 25 umfasst zwei Mehrgelenkanordnungen 26a, 26b, die vorliegend als Viergelenke 27a, 27b ausgestaltet sind.

Die Viergelenke 27a, 27b enthalten Schwenkarme 28 und Lenkarme 29, die an Schwenklagern 30, 31 schwenkbar an den Längsträgern 14a, 14b gelagert sind. Die Schwenklager 30, 31 befinden sich an einem Längsende der Arme 28, 29. An einem diesem Längsende entgegengesetzten Längsende sind weitere Schwenklager 32, 33 zwischen den Armen 28 und 29 einerseits und der Trageanordnung 19a andererseits vorhanden.

Wenn gleich lange Schwenkarme und Lenkarme vorgesehen sind, würde die Trageanordnung beim Schwenken von der Fahrstellung F in die Ladestellung L und umgekehrt eine parallelogrammartige Bewegung durchlaufen, d.h. ihre Oberseite wäre stets horizontal oder zumindest im Wesentlichen horizontal.

Beim Ausführungsbeispiel sind allerdings die Schwenkarme 28 kürzer als die Lenkarme 29. Dadurch schwenkt die Trageanordnung 19a, so dass sie in der Ladestellung L schräg vom Fahrzeugheck des Kraftfahrzeugs 12 weg steht. Diese Maßnahme vergrößert den Schwenkbereich 21.

Zum Betätigen der Trageanordnung 19a, insbesondere zum Verlagern der Fahrstellung P in die Ladestellung L, sind Fußbetätigungseinrichtungen 35a, 35b zweckmäßig.

Die Fußbetätigungseinrichtung 35a enthält beispielsweise ein Pedal 36, das mit einem der kürzeren Schwenkarme 28. wirkverbunden ist. Zweckmäßigerweise ist das Pedal 36 drehfest und schwenkfest mit dem Schwenkarm 28 verbunden. Auch eine einstückige Bauweise, bei der der Schwenkarm 28 sozusagen zu dem Pedal 36 hin verlängert ist, ist denkbar.

Das Pedal 36 steht winkelig vor den Schwenkarm 28 vor. Durch eine einfache Fußbetätigung des Pedals 36 kann die Trageanordnung 19a in die Ladestellung L geschwenkt werden.

Bei dem Lastenträger 10b ist ein alternatives Betätigungskonzept vorgesehen. Seine Fußbetätigungseinrichtung 35b umfasst beispielsweise ein Betätigungsteil 37, das in Fahrzeugquerrichtung des Kraftfahrzeugs 12 verläuft.

Das Betätigungsteil 37 ist schwenkbar an der Tragstruktur 13a angeordnet. Das Betätigungsteil 37 greift an zwei zueinander beabstandeten Angriffspunkten an der Trageanordnung oder der Schwenklageranordnung an.

Das Betätigungsteil 37 umfasst einen Schwenkbügel 38 mit Armen 39, zwischen denen eine mit z.B. einem Fuß 60 betätigbare Betätigungsstange 40 verläuft. Die Betätigungsstange 40 ist beispielsweise an die Arme 39 an deren einem Längsende angeschweißt.

Anstelle des aus mehreren Komponenten gebildeten Schwenkbügels 38 könnte auch ein einstückiger Schwenkbügel vorgesehen sein.

Nun wäre es möglich, dass beispielsweise die Schwenkarme 28 zu den Armen 39 hin verlängert und mit diesen verbunden sind oder die Arme 39 bilden. Dann würde die Betätigungsstange 40 stets eine mit der Schwenkstellung der Schwenkarme 28 korrespondierende Schwenklage einnehmen. Beim Ausführungsbeispiel ist jedoch ein anderes Lager-Konzept gewählt:

Die Arme 39 sind schwenkbar an der Tragstruktur 13a gelagert. Für eine Schwenklagerung eines erfindungsgemäßen Betätigungsteils können zwar separate Schwenklager an der Tragstruktur vorgesehen sein. Die Arme 39 sind jedoch am Schwenklager 30 schwenkbeweglich gelagert. Die Betätigungsstange 40 ist an den Schwenklagern 30 relativ zu den Schwenkarmen 28 schwenkbar gelagert.

Somit ist ein Freigang 41 vorhanden, bei dem der Schwenkbügel 38 zwischen einer Ruhestellung R, bei der Betätigungsenden 42 der Arme 39 außer Eingriff mit den Schwenkarmen 28 sind, und einer Arbeitsstellung A verstellbar ist, bei der die Betätigungsenden 42 an den Schwenkarmen 28 angreifen. Beispielsweise sind hierfür Betätigungsausnehmungen 43 an den Betätigungsenden 42 vorgesehen.

Es ist vorteilhaft, wenn die Fußbetätigungseinrichtung 35b eine solche Schwerpunktlage aufweist, dass sie selbstständig in der Ruhestellung R bleibt.

Der die Fußbetätigungseinrichtung 35b ist in ihrer Ruhestellung R beispielsweise nach oben geschwenkt. Die Fußbetätigungseinrichtung 35b braucht dann z.B. weniger Platz.

Zweckmäßigerweise liegt die Betätigungsstange 40 in ihrer Ruhestellung R auf den beiden Längsträgern 14a, 14b an Positionen 56a, 56b auf.

Die Lastenträger 10a, 10b weisen ein flexibles Erweiterungskonzept auf.

Das Tragegestell 20 enthält einen Basis-Träger 44, dessen durch eine Tragplattform 53 bereitgestellte Ladekapazität durch Erweiterungsbauteile 45 vergrößert werden kann. Die Erweiterungsbauteile 45 sind beispielsweise Trägerstäbe 46, die nach hinten vor den Basisträger 44 vorstehen.

Vor die Tragplattform 53 stehen ferner als Erweiterungsbauteile Tragelemente 58 vor, z.B. zum Abstellen der Fahrräder 23. Die Tragelemente 58 sind zweckmäßigerweise teleskopierbar und/oder bezüglich der Basis-Trägers 44 verschieblich, so dass sie bei Nichtgebrauch unter die Tragplattform 53 geschoben werden können.

Die Trägerstäbe 46 haben einen stufigen oder S-artigen Verlauf. Befestigungsabschnitte 47 der Trägerstäbe 46, die in der Fahrstellung F einen im Wesentlichen horizontalen Verlauf haben, sind an in Fahrzeuglängsrichtung verlaufenden Tragelementen 48 des Tragegestells 20 befestigt. Somit verlaufen die Befestigungsabschnitte 47 korrespondierend mit den Tragelementen 48. Die Befestigungsabschnitte 47 können z.B. seitlich an den Tragelementen 48 befestigt werden. Zur Befestigung können beispielsweise Sicherungssplinte, Bolzen oder dergleichen vorgesehen sein. Die Befestigungsabschnitte 47 können auch L-förmig oder U-förmig sein, so dass sie auf die Tragelemente 48 sozusagen aufgesattelt werden können und sich auf den Tragelementen 48 zumindest oberseitig abstützen.

An die Befestigungsabschnitte 47 schließen sich Schrägabschnitte 49 der Trägerstäbe 46 an. Die Schrägabschnitte 49 verlaufen in der Fahrstellung F schräg weg vom Kraftfahrzeug 12 geneigt. An die Schrägabschnitte 49 schließen sich Tragabschnitte 50 der Trägerstäbe 46 an, die in der Fahrstellung F im Wesentlichen horizontal verlaufen. Auf den Tragabschnitten 50 können beispielsweise eine Tragplattform oder Last-Halterungen, z.B. Sportgerätehalter 24, befestigt werden.

Die Tragabschnitte 50 oder daran angeordnete Sportgerätehalter 24 bilden vorzugsweise Betätigungshandhaben zum Verstellen der Trageanordnung 19a von der Fahrstellung F in die Ladestellung L und/oder umgekehrt. Die Tragabschnitte 50 und/oder die Sportgerätehalter 24 kragen bezüglich der Schwenklager 30 verhältnismäßig weit aus und bilden somit Betätigungsarme oder Betätigungshebel, die eine leichte manuelle Betätigung der Trageanordnung 19a bei einem Verstellen von der Fahrstellung F in die Ladestellung L und umgekehrt ermöglichen. Die Bedienbarkeit des Lastenträgers 10b ist somit nicht eingeschränkt, auch wenn beispielsweise das Fuß-Betätigungsteil 37 durch die Erweiterung mit Hilfe der Erweiterungsbauteile 45 schwerer zugänglich ist.

Die Trageanordnung 19a kann mit einer Verriegelungseinrichtung 51 bezüglich der Tragstruktur 13a verriegelt werden. Die Verriegelungseinrichtung 51 enthält beispielsweise ein mit der Trageanordnung 19a fest verbundenes, jedoch bewegliches Verriegelungselement 52, beispielsweise eine Verriegelungsschraube oder einen Verriegelungsbolzen, das zum Verriegeln in eine Verriegelungsaufnahme 55 der Tragstruktur 19a eingreift.

Die Trageanordnung 19a stellt mit den angebauten durch Erweiterungsbauteilen 45 eine untere Ladeebene 65 und eine obere Ladeebene 66 bereit. Somit ist unterhalb der oberen Ladeebene 66 ein Freiraum 67 zum Schwenken der Trageanordnung 19a in Richtung einer Fahrbahnoberfläche 69 vorhanden. Ferner lässt die obere Ladeebene 66 einen Blickbereich zu einer Heckleuchtenanordnung 70 frei, die am vom Kraftfahrzeug 12 abgewandten freien Ende der Tragstruktur 13 angeordnet ist. Die Heckleuchtenanordnung 70 enthält Heckleuchten 71, die mit einem Bordnetz 72 verbindbar sind, beispielsweise über eine Verbindung 73, bei der ein Stecker des Lastenträgers 10a in eine Steckdose des Kraftfahrzeuges 12 eingesteckt ist.

Bei dem Lastenträger 10c ist eine stufige Trageanordnung 19c über eine Schwenklageranordnung 25c an einer Tragstruktur 13c schwenkbar gelagert. Die Tragstruktur 13c enthält beispielsweise Längsträger 14c, die in Aufnahmen am Heckbereich des Kraftfahrzeuges 12 eingesteckt sind und/oder beispielsweise an der Anhängekupplung 18 befestigt sind. Die Tragstruktur 13c stellt eine horizontale Tragebene bereit. Die Trageanordnung 19c ist treppenartig und stellt eine untere und eine obere Ladeebene 65, 66 bereit.

Auf jeder Ladeebene 65, 66 sind im einzelnen nicht dargestellte Halter, z.B. Sportgerätehalter für beispielsweise Fahrräder 23 fest, lösbar oder beweglich gehaltert. Beispielsweise stehen die unteren Fahrräder 23 auf einer unteren Plattform 74 während die auf der oberen Ladeebene 66 befindlichen Fahrräder 23 auf einer oberen Plattform 75 angeordnet sind. Das Wort "Plattform" ist hier in einem weiteren Sinne zu verstehen, d.h. es können zwar flächige Ablagen, z.B. Ablageplatten oder dergleichen, vorgesehen sein, oder aber beispielsweise auch Halterinnen für die Räder der Fahrräder 23 auf den beiden Ebenen 65, 66 vorgesehen sein.

Die Trageanordnung 19c enthält Gestell 85, das in der Art einer Wippe an der Tragstruktur 13c schwenkbar gelagert ist. Man kann das Gestell 85 daher auch als Wippe bezeichnen.

Die Schwenklageranordnung 25c enthält zwei Schwenklager 83, die am freien Endbereich der Längsträger 14 bzw. der Tragstruktur 13c angeordnet sind. Die Schwenklager 76 definieren eine Schwenkachse 77, um die die Trageanordnung 19c zwischen einer Fahrstellung F und einer Ladestellung L schwenkt.

Die Schwenkachse 77 verläuft horizontal. Die Schwenkachse 77 verläuft bezogen auf eine Fahrzeuglängsrichtung 78 des Kraftfahrzeuges 12 etwa in einer Längsmitte zwischen den beiden Plattformen 74 und 75. Beim Ausführungsbeispiel verläuft die Schwenkachse 77 etwa im Bereich der unteren Ladeebene 65. Es versteht sich, dass ein Verlauf durch beispielsweise die obere Ladeebene 66 durchaus denkbar ist, beispielsweise wenn ein L-förmig nach oben abstehender Abschnitt an der Tragstruktur 13c nach oben vorstehen würde. Die etwa längsmittige Anordnung der Schwenkachse 77 erleichtert ein Schwenken um die schwenkachse 77, weil die auf den beiden Ladeebenen 65, 66 angeordneten Lasten 34 etwa dieselben Hebelarme und somit etwa ähnliche Kräfte auf die Trageanordnung 19c beidseits der Schwenkachse 77 ausüben.

Zudem ist wegen der etwa längsmittigen Anordnung der Schwenkachse 77 der Schwenkwinkel, um den die Trageanordnung 19c zwischen der Fahrstellung F und Ladestellung L schwenkt, kleiner.

Die Trageanordnung 19c enthält beispielsweise zwei seitliche Träger 79 mit in der Fahrstellung F horizontal verlaufenden, die Ladeebenen 65, 66 definierenden Tragabschnitten 80, 81, zwischen denen ein verbindungsabschnitt 82 verläuft. Die Träger 79 sind beispielsweise Metallprofile oder dergleichen.

Die Heckleuchtenanordnung 70c ist zweckmäßigerweise schwenkbar an der Trägerstruktur 13c angeordnet. Zum oder beim Schwenken der Trageanordnung 19c in die Ladestellung L wird die Heckleuchtenanordnung 70c beispielsweise nach unten geschwenkt. Dies wird beispielsweise dadurch bewirkt, dass der verbindungsabschnitt 82 von oben her auf die Heckleuchtenanordnung 70c wirkt. Die Heckleuchtenanordnung 70c kann beispielsweise unter Federeinwirkung oder dergleichen wieder zurück nach oben in eine im wesentlichen senkrechte, der Fahrstellung F zugeordnete Fahrposition schwenken.

Der Lastenträger 10d hat eine feststehenden, stufenförmige Trägerstruktur 84 mit einer unteren und einer oberen Ladeebene 65 und 66, die durch eine Tragstruktur 13d bereitgestellt werden. Von am Kraftfahrzeug 12 befestigen Längsträgern 14d stehen stufenförmig Träger 79d nach hinten oben vor. Die untere Ladeebene wird durch die Längsträgern 14d definiert, die obere Ladeebene 66 durch die Träger 79d bereitgestellt.

Die Tragabschnitte 80, 81 sind im wesentlichen gleich lang, sodass sie auf den Ladeebenen 65, 66 bereitstehende Ladekapazität etwa gleich groß ist.

## Patentansprüche

1. Lastenträger für ein Kraftfahrzeug (12), insbesondere einen Personenkraftwagen, mit einer zum Tragen einer Last (34) vorgesehenen Tragstruktur (13c), die in einer Arbeitsstellung des Lastenträgers nach hinten vor einen Heckbereich (11) des Kraftfahrzeugs (12) vorsteht, wobei der Lastenträger eine untere, näher beim Fahrzeugheck angeordnete Ladeebene (65) und eine obere vom Fahrzeugheck entferntere Ladeebene (66) aufweist, wobei der Lastenträger eine bezüglich der Tragstruktur (13c) zwischen einer für einen Fahrbetrieb des Kraftfahrzeugs (12) vorgesehenen Fahrstellung (F) und einer zum Be- und Entladen des Kraftfahrzeugs (12) vorgesehenen Ladestellung (L) anhand einer Schwenklagerung schwenkbar gelagerte Trageanordnung (19c) zum Auflegen der Last (34) aufweist, wobei die Trageanordnung (19c) mit der auf ihr angeordneten Last (34) in der Ladestellung (L) einen Schwenkbereich (21) einer Heckklappe (22) oder einer Hecktür des Kraftfahrzeugs (12) freigibt, **dadurch gekennzeichnet, dass** die Trageanordnung (19c) in der Art einer Wippe ausgebildet ist und eine erste Wipparmanordnung einerseits der Schwenklagerung die untere Ladeebene (65) definiert und eine zweite Wipparmanordnung andererseits der Schwenklagerung die obere Ladeebene (66) definiert.

2. Lastenträger nach Anspruch 1, **dadurch gekennzeichnet, dass** an der Tragstruktur eine Heckleuchtenanordnung (70; 70c) angeordnet ist, dass die Heckleuchtenanordnung unterhalb der oberen Ladeebene (66) und vom hinteren, freien Ende des Lastenträgers entfernt näher beim Fahrzeugheck angeordnet ist, und dass die obere Ladeebene (66) derart oberhalb der unteren Ladeebene (65) angeordnet ist, dass ein Blickbereich zu der Heckleuchtenanordnung (70; 70c) frei bleibt.

3. Lastenträger nach Anspruch 1 oder 2, **dadurch gekennzeichnet, dass** die untere und die obere Ladeebene (65, 66) im wesentlichen dieselbe Ladekapazität aufweisen und/oder in Fahrzeuglängsrichtung (78) im wesentlichen gleich lang sind.

4. Lastenträger nach einem der vorhergehenden Ansprüche, **dadurch gekennzeichnet, dass** die Heckleuchtenanordnung (70; 70c) schwenkbar ist.

5. Lastenträger nach Anspruch 1, **dadurch gekennzeichnet, dass** die untere und die obere Ladeebene (65, 66) an der Trageanordnung angeordnet sind.

6. Lastenträger nach Anspruch 1 oder 5, **dadurch gekennzeichnet, dass** die Trageanordnung (19c) in der Ladestellung (L) eine vom Kraftfahrzeug (12) abgewandte Schrägstellung einnimmt.

7. Lastenträger nach einem der Ansprüche 1, 5 oder 6, **dadurch gekennzeichnet, dass** die Trageanordnung an einer Schwenklageranordnung (25c) schwenkbar gelagert ist.

8. Lastenträger nach Anspruch 7, **dadurch gekennzeichnet, dass** eine insbesondere etwa horizontale Schwenkachse (77) der Schwenklageranordnung (25c) bezüglich der Fahrzeuglängsrichtung (78) des Kraftfahrzeugs zwischen einem dem Fahrzeugheck zugewandten Längsendbereich der unteren Ladeebene (65) und einem freien, vom Fahrzeugheck abgewandten Endbereich der oberen Ladeebene (66) verläuft.

9. Lastenträger nach Anspruch 8, **dadurch gekennzeichnet, dass** die Schwenkachse (77) im Bereich der unteren Ladeebene (65) verläuft.

10. Lastenträger nach Anspruch 8 oder 9, **dadurch gekennzeichnet, dass** die Schwenkachse (77) etwa im Bereich einer Längsmitte zwischen der unteren und der oberen Ladeebene (65, 66) verläuft.

11. Lastenträger nach einem der Ansprüche 9 bis 10, **dadurch gekennzeichnet, dass** die Schwenkachse (77) durch ein Schwenklager der Schwenklageranordnung (25c) verläuft.

12. Lastenträger nach einem der Ansprüche 7 bis 11, **dadurch gekennzeichnet, dass** die Trageanordnung (19c) zumindest im beladenen Zustand eine solche Schwerpunkt läge aufweist, dass sie selbsttätig in der Fahrstellung (F) und/oder in der Ladestellung (L) bleibt.

13. Lastenträger nach Anspruch 12, **dadurch gekennzeichnet, dass** die Trageanordnung (19c) auf einem Verstellweg zwischen der Fahrstellung (F) und der Ladestellung (L) einen Kipppunkt durchläuft.

14. Lastenträger nach einem der Ansprüche 1 oder 5 bis 13, **dadurch gekennzeichnet, dass** er eine Fußbetätigungseinrichtung (35) zum Verlagern der Trageanordnung (19c) in die Ladestellung (L) und/oder die Fahrstellung (F) aufweist.

15. Lastenträger nach Anspruch 14, **dadurch gekennzeichnet, dass** die Fußbetätigungseinrichtung (35) einen Freigang (41) aufweist, so dass sie zwischen einer Ruhestellung (R), bei der sie außer Eingriff mit der Trageanordnung (19c) ist, und einer Arbeitsstellung (A) verstellbar ist, bei der sie zum Verstellen der Trageanordnung (19c) mit dieser in Eingriff ist.

16. Lastenträger nach Anspruch 15, **dadurch gekennzeichnet, dass** die Fußbetätigungseinrichtung (35) ein mit zwei in Fahrzeugquerrichtung zueinander beabstandeten Bauteilen der Trageanordnung (19c) und/oder der Schwenklageranordnung (25c) verbundenes Betätigungsteil (37) aufweist.

17. Lastenträger nach einem der Ansprüche 15 bis 16, **dadurch gekennzeichnet, dass** die Fußbetätigungseinrichtung (35) ein Pedalelement (36) umfasst, das in einer Wirkstellung einen Arm der Schwenklageranordnung (25c) verlängert oder mit dem Arm verbunden ist.

18. Lastenträger nach einem der Ansprüche 1 oder 5 bis 17, **dadurch gekennzeichnet, dass** er eine Verriegelungseinrichtung (51) zum Verriegeln der Trageanordnung (19c) bezüglich der Tragstruktur (13a, 13c) zumindest in der Fahrstellung (F) und/oder in der Ladestellung (L) aufweist.

19. Lastenträger nach einem der Ansprüche 1 oder 5 bis 18, **dadurch gekennzeichnet, dass** die Trageanordnung (19c) zumindest in der Fahrstellung (F) oberhalb oder auf der Tragstruktur (13a, 13c) angeordnet ist.

20. Lastenträger nach einem der vorhergehenden Ansprüche, **dadurch gekennzeichnet, dass** er eine insbesondere an der Trageanordnung (19c) angeordnete Trägerplattform zum Abstellen der Last (34) und/oder eine Sportgerätehalterung (24), insbesondere eine Fahrradhalterung, aufweist.

21. Lastenträger nach einem der vorhergehenden Ansprüche, **dadurch gekennzeichnet, dass** die Tragstruktur oder die Trageanordnung (19c) mindestens ein lösbar an einem Basis-Träger (44) anordenbares oder daran beweglich gelagertes Erweiterungsbauteil (45) zum Vergrößern der Ladekapazität aufweist.

22. Lastenträger nach Anspruch 21, **dadurch gekennzeichnet, dass** die obere Ladeebene (66) durch das mindestens eine Erweiterungsbauteil (45) bereitgestellt wird.

23. Lastenträger nach Anspruch 21 oder 22, **dadurch gekennzeichnet, dass** das mindestens eine Erweiterungsbauteil (45) einen stufenförmigen oder S-artigen Trägerstab (46) umfasst, das seitlich an dem Basis-Träger (44) lösbar befestigbar ist.

24. Lastenträger nach einem der Ansprüche 21 bis 23, **dadurch gekennzeichnet, dass** das mindestens eine Erweiterungsbauteil (45) eine Betätigungshandhabe zum Verlagern der Trageanordnung (19c) in die Ladestellung (L) und/oder die Fahrstellung (F) aufweist oder bildet.

25. Lastenträger nach einem der vorhergehenden Ansprüche, **dadurch gekennzeichnet, dass** die Tragstruktur (13a, 13c) ein an dem Kraftfahrzeug (12) verschieblich angeordnetes Trägerteil umfasst, insbesondere eine vor eine Karosserie (15) des Kraftfahrzeugs (12) nach hinten ausziehbare Tragplattform, aufweist.

26. Lastenträger nach einem der vorhergehenden Ansprüche, **dadurch gekennzeichnet, dass** die Tragstruktur (13a, 13c) eine Halterung (16) zum lösbaren Anordnen an einer Anhängekupplung (18) des Kraftfahrzeugs (12) aufweist.

## Claims

1. Load carrier for a motor vehicle (12), in particular a car, with a support structure (13c) for carrying a load (34) which, in an operating position of the load carrier, extends to the rear beyond a rear section (11) of the motor vehicle (12), wherein the load carrier has a lower loading level (65) located closer to the vehicle tail end, and an upper loading level (66) further away from the vehicle tail end, wherein the load carrier has a support assembly (19c) for placing the load (34), mounted pivotably relative to the support structure (13), with the aid of a swivel bearing, between a vehicle running position (F) provided for operation of the motor vehicle (12) and a loading position (L) provided for loading and unloading of the motor vehicle (12), wherein the support assembly (19c) with the load (34) mounted on it releases in the loading position (L) a swivelling section (21) of a tailgate (22) or a rear door of the motor vehicle (12), **characterised in that** the support assembly (19c) is designed in the manner of a rocker, with a first rocker arm assembly at one end of the swivel bearing defining the lower loading level (65) and a second rocker arm assembly at the other end of the swivel bearing defining the upper loading level (66).

2. Load carrier according to claim 1, **characterised in that** a taillight assembly (70; 70c) is mounted on the support structure, that the taillight assembly is located below the upper loading level (66), away from the rear free end of the load carrier and closer to the vehicle tail end, and that the upper loading level (66) is located above the lower loading level (65) in such a way that a view of the taillight assembly (70; 70c) remains free.

3. Load carrier according to claim 1 or 2, **characterised in that** the lower and upper loading levels (65, 66) have substantially the same loading capacity and/or substantially the same length in the vehicle longitudinal direction (78).

4. Load carrier according to any of the preceding claims, **characterised in that** the taillight assembly (70; 70c) is pivotable.

5. Load carrier according to claim 1, **characterised in that** the lower and the upper loading level (65, 66) are located on the support assembly.

6. Load carrier according to claim 1 or 5, **characterised in that** the support assembly (19c) in the loading position (L) adopts an inclined position facing away from the motor vehicle (12).

7. Load carrier according to any of claims 1, 5 or 6, **characterised in that** the support assembly is pivotably mounted on a swivel bearing assembly (25c).

8. Load carrier according to claim 7, **characterised in that** a swivel axis (77) of the swivel bearing assembly (25c), in particular roughly horizontal, runs with reference to the vehicle longitudinal direction (78) of the motor vehicle between a longitudinal end section of the lower loading level (65) facing the vehicle tail end, and a free end section of the upper loading level (66) facing away from the vehicle tail end.

9. Load carrier according to claim 8, **characterised in that** the swivel axis (77) runs in the area of the lower loading level (65).

10. Load carrier according to claim 8 or 9, **characterised in that** the swivel axis (77) runs approximately in the area of a longitudinal centre between the lower and the upper loading level (65, 66).

11. Load carrier according to any of claims 9 to 10, **characterised in that** the swivel axis (77) runs through a swivel bearing of the swivel bearing assembly (25c).

12. Load carrier according to any of claims 7 to 11, **characterised in that** the support assembly (19c) has, at least in the loaded state, a centre of gravity such that it remains automatically in the vehicle running position (F) and/or in the loading position (L).

13. Load carrier according claim 12, **characterised in that** the support assembly (19c), on an adjustment path between the vehicle running position (F) and the loading position (L), runs though a tipping point.

14. Load carrier according to any of claims 1 or 5 to 13, **characterised in that** it has a pedal-operated device (35) to shift the support assembly (19c) into the loading position (L) and/or the vehicle running position (F).

15. Load carrier according to claim 14, **characterised in that** the pedal-operated device (35) has a clearance (41) so that it may be adjusted between a rest position (R) in which it is disengaged from the support assembly (19c), and an operating position (A) in which it is engaged with the support assembly (19c) for adjustment of the latter.

16. Load carrier according to claim 15, **characterised in that** the pedal-operated device (35) has an actuating element (37) connected to two components of the support assembly (19c) spaced apart in the vehicle transverse direction and/or the swivel bearing assembly (25c).

17. Load carrier according to any of claims 15 to 16, **characterised in that** the pedal-operated device (35) includes a pedal element (36) which, in an operative position, lengthens an arm of the swivel bearing assembly (25c) or is connected to the arm.

18. Load carrier according to any of claims 1 or 5 to 17, **characterised in that** it has a locking device (51) for locking the support assembly (19c) relative to the support structure (13a, 13c), at least in the vehicle running position (F) and/or in the loading position (L).

19. Load carrier according to any of claims 1 or 5 to 18, **characterised in that** the support assembly (19c), at least in the vehicle running position (F), is located above or on the support structure (13a, 13c).

20. Load carrier according to any of the preceding claims, **characterised in that** it has, in particular mounted on the support assembly (19c), a carrier platform for setting down the load (34) and/or a sports equipment rack (24), in particular a cycle rack.

21. Load carrier according to any of the preceding claims, **characterised in that** the support structure or the support assembly (19c) has at least one extension member (45), for increasing the loading capacity, which may be fitted to a base carrier (44) or mounted movably thereon.

22. Load carrier according to claim 21, **characterised in that** the upper loading level (66) is provided by the extension member or members (45).

23. Load carrier according to claim 21 or 22, **characterised in that** the extension member or members (45) include an step-like or S-shaped support bar (46), which may be attached releasably to the base carrier (44).

24. Load carrier according to any of claims 21 to 23, **characterised in that** the extension member or members (45) has or have or forms or form an operating handle to shift the support assembly (19c) into the loading position (L) and/or the vehicle running position (F).

25. Load carrier according to any of the preceding claims, **characterised in that** the support structure (13a, 13c) includes a carrier element mounted slidably on the motor vehicle (12), in particular a carrier platform which may be pulled out rearwards beyond the body (15) of the motor vehicle (12).

26. Load carrier according to any of the preceding claims, **characterised in that** the support structure (13a, 13c) has a mounting (16) for releasable fitting to a trailer coupling (18) of the motor vehicle (12).

## Revendications

1. Support de charges pour un véhicule automobile (12), en particulier un véhicule de tourisme, avec une structure porteuse (13c) prévue pour supporter une charge (34), qui fait saillie, dans une position de travail du support de charges, vers l'arrière devant une zone arrière (11) du véhicule automobile (12), dans lequel le support de charges présente un niveau de chargement inférieur (65) disposé davantage à proximité de la partie arrière de véhicule et un niveau de chargement supérieur (66) plus éloigné de la partie arrière de véhicule, dans lequel le support de charges présente un ensemble porteur (19c) monté de manière à pouvoir pivoter par rapport à la structure porteuse (13c) entre une position de déplacement (F) prévue pour un mode de déplacement du véhicule automobile (12) et une position de chargement (L) prévue pour charger et décharger le véhicule automobile (12) à l'aide d'un palier de pivotement, servant à placer la charge (34), dans lequel l'ensemble porteur (19c) dégage avec la charge (34) qui est disposée sur lui dans la position de chargement (L) une zone de pivotement (21) d'un hayon arrière (22) ou d'une portière arrière du véhicule automobile (12), **caractérisé en ce que** l'ensemble porteur (19c) est réalisé à la manière d'une bascule, et un premier ensemble formant bras à bascule d'une part du palier de pivotement définit le niveau de chargement inférieur (65) et un deuxième ensemble formant bras basculant d'autre part du palier de pivotement définit le niveau de chargement supérieur (66).

2. Support de charges selon la revendication 1, **caractérisé en ce qu'**un ensemble de feux arrière (70; 70c) est disposé au niveau de la structure porteuse, que l'ensemble de feux arrière est disposé davantage à proximité de l'arrière de véhicule sous le niveau de chargement supérieur (66) et de manière éloignée de l'extrémité arrière libre du support de charges, et que le niveau de chargement supérieur (66) est disposé de telle manière au-dessus du niveau de chargement inférieur (65) qu'un champ de vision reste dégagé par rapport à l'ensemble formant des feux arrière (70 ; 70c).

3. Support de charges selon la revendication 1 ou 2, **caractérisé en ce que** le niveau de chargement inférieur et le plan de chargement supérieur (65, 66) présentent sensiblement la même capacité de chargement et/ou présentent sensiblement la même longueur dans le sens longitudinal de véhicule (78).

4. Support de charges selon l'une quelconque des revendications précédentes, **caractérisé en ce que** l'ensemble de feux arrière (70 ; 70c) peut pivoter.

5. Support de charges selon la revendication 1, **caractérisé en ce que** le niveau de chargement inférieur et le niveau de chargement supérieur (65, 66) sont disposés au niveau de l'ensemble porteur.

6. Support de charges selon la revendication 1 ou 5, **caractérisé en ce que** l'ensemble porteur (19c) adopte, dans la position de chargement (L), une position inclinée opposée au véhicule automobile (12).

7. Support de charges selon l'une quelconque des revendications 1, 5 ou 6, **caractérisé en ce que** l'ensemble porteur est monté de manière à pouvoir pivoter au niveau d'un ensemble de paliers de pivotement (25c).

8. Support de charges selon la revendication 7, **caractérisé en ce qu'**un axe de pivotement (77) en particulier à peu près horizontal de l'ensemble de paliers de pivotement (25c) s'étend par rapport au sens longitudinal de véhicule (78) du véhicule automobile entre une zone d'extrémité longitudinale, tournée vers l'arrière de véhicule, du niveau de chargement inférieur (65) et une zone d'extrémité libre, opposée à l'arrière de véhicule, du niveau de chargement supérieur (66).

9. Support de charges selon la revendication 8, **caractérisé en ce que** l'axe de pivotement (77) s'étend dans la zone du niveau de chargement inférieur (65).

10. Support de charges selon la revendication 8 ou 9, **caractérisé en ce que** l'axe de pivotement (77) s'étend à peu près dans la zone d'un centre longitudinal entre le niveau de chargement inférieur et le niveau de chargement supérieur (65, 66).

11. Support de charges selon l'une quelconque des revendications 9 à 10, **caractérisé en ce que** l'axe de pivotement (77) s'étend à travers un palier de pivotement de l'ensemble de paliers de pivotement (25c).

12. Support de charges selon l'une quelconque des revendications 7 à 11, **caractérisé en ce que** l'ensemble porteur (19c) présente au moins dans l'état chargé une position de centre de gravité telle qu'il reste de manière autonome dans la position de déplacement (F) et/ou dans la position de chargement (L).

13. Support de charges selon la revendication 12, **caractérisé en ce que** l'ensemble porteur (19c) traverse un point de basculement sur un trajet d'ajustement entre la position de déplacement (F) et la position de chargement (L).

14. Support de charges selon l'une quelconque des revendications 1 ou 5 à 13, **caractérisé en ce qu'**il présente un dispositif d'actionnement au pied (35) servant à déplacer l'ensemble porteur (19c) dans la position de chargement (L) et/ou dans la position de déplacement (F).

15. Support de charges selon la revendication 14, **caractérisé en ce que** le système d'actionnement au pied (35) présente un accès libre (41), si bien qu'il peut être ajusté entre une position de repos (R), dans laquelle il n'est pas en prise avec l'ensemble porteur (19c), et une position de travail (A), dans laquelle il est en prise avec l'ensemble porteur (19c) aux fins de l'ajustement de ce dernier.

16. Support de charges selon la revendication 15, **caractérisé en ce que** le système d'actionnement au pied (35) présente une partie d'actionnement (37) reliée à deux composants, espacés l'un par rapport à l'autre dans le sens transversal de véhicule, de l'ensemble porteur (19c) et/ou de l'ensemble de paliers de pivotement (25c).

17. Support de charges selon l'une quelconque des revendications 15 à 16, **caractérisé en ce que** le système d'actionnement au pied (35) comprend un élément formant pédale (36), qui prolonge dans une position active un bras de l'ensemble de paliers de pivotement (25c) ou qui est relié au bras.

18. Support de charges selon l'une quelconque des revendications 1 ou 5 à 17, **caractérisé en ce qu'**il présente un système de verrouillage (51) servant à verrouiller l'ensemble porteur (19c) par rapport à la structure porteuse (13a, 13c) au moins dans la direction de déplacement (F) et/ou dans la position de chargement (L).

19. Support de charges selon l'une quelconque des revendications 1 ou 5 à 18, **caractérisé en ce que** l'ensemble porteur (19c) est disposé au moins dans la position de déplacement (F) au-dessus de la structure porteuse (13a, 13c) ou sur celle-ci.

20. Support de charges selon l'une quelconque des revendications précédentes, **caractérisé en ce qu'**il présente une plate-forme de support disposée en particulier au niveau de l'ensemble porteur (19c), servant à déposer la charge (34) et/ou une fixation d'équipements sportifs (24), en particulier une fixation de bicyclettes.

21. Support de charges selon l'une quelconque des revendications précédentes, **caractérisé en ce que** la structure porteuse ou l'ensemble porteur (19c) présente au moins un composant d'élargissement (45) pouvant être disposé de manière amovible au niveau d'un support de base (44) ou monté de manière mobile au niveau de ce dernier, servant à agrandir la capacité de chargement.

22. Support de charges selon la revendication 21, **caractérisé en ce que** le niveau de chargement supérieur (66) est fourni par l'au moins un composant d'élargissement (45).

23. Support de charges selon la revendication 21 ou 22, **caractérisé en ce que** l'au moins un composant d'élargissement (45) comprend une barre porteuse (46) en forme de palier ou de type S, qui peut être fixée de manière amovible latéralement au niveau du support de base (44).

24. Support de charges selon l'une quelconque des revendications 21 à 23, **caractérisé en ce que** l'au moins un composant d'élargissement (45) présente ou forme une manette d'actionnement servant à déplacer l'ensemble porteur (19c) dans la position de chargement (L) et/ou dans la position de déplacement (F).

25. Support de charges selon l'une quelconque des revendications précédentes, **caractérisé en ce que** la structure porteuse (13a, 13c) comprend une partie de support disposée de manière à pouvoir coulisser au niveau du véhicule automobile (12), en particulier une plate-forme porteuse pouvant être déployée vers l'arrière devant une carrosserie (15) du véhicule automobile (12).

26. Support de charges selon l'une quelconque des revendications précédentes, **caractérisé en ce que** la structure porteuse (13a, 13c) présente une fixation (16) destinée à être disposée de manière amovible au niveau d'un attelage de remorque (18) du véhicule automobile (12).
